# EUROPEAN PATENT SPECIFICATION

(11) **EP 1 649 139 B1**
(45) Date of publication and mention of the grant of the patent: **24.06.2009**
(21) Application number: 04748787.1
(22) Date of filing: 08.07.2004
(51) Int. Cl.: E21B 43/36, B01D 17/06

(54) **A PIPE SEPARATOR WITH IMPROVED SEPARATION**
ROHRTRENNVORRICHTUNG MIT VERBESSERTER TRENNUNG
SEPARATEUR DE CONDUITE AVEC SEPARATION AMELIOREE

(30) Priority: 09.07.2003 NO 20033153
(43) Date of publication of application: 26.04.2006
(73) Proprietor: NORSK HYDRO ASA, 0240 Oslo (NO)
(72) Inventor: GRAMME, Per, N-3931 Porsgrunn (NO); LIE, Gunnar, Hannibal, N-3928 Porsgrunn (NO)
(74) Representative: Jackson, Robert Patrick
(86) International application number: PCT/NO2004/000211
(87) International publication number: WO 2005/005777

(56) References cited:
- WO-A1-01/85297
- WO-A1-02/89947
- US-A- 3 766 050

## Description

The present invention concerns a pipe separator for separation of fluids, for example separation of oil, gas and water in connection with the extraction and production of oil and gas from formations under the sea bed, comprising an extended, tubular separator body that has a diameter at the inlet and outlet ends that is mainly equivalent to the diameter of the transport pipe to which the pipe separator is connected, a cyclone arranged upstream of the separator body for separation of any gas present and an electrostatic coalescer arranged in connection with the pipe separator.

The applicant's own Norwegian patent application nos. 19994244, 20015048, 20016216. 20020619 and 20023919 describe prior art pipe separators for the separation of oil, water and/or gas downhole, on the sea bed or on the surface, on a platform or similar. In particular, patent application no. 20023919 shows a solution in which a separate, compact electrostatic coalescer is used in connection with the pipe separator. The oil flow from the pipe separator is passed to the coalescer downstream of the pipe separator and subsequently to a further oil/water separator that removes the remaining water after separation in the pipe separator. This prior art solution is particularly designed for, but not limited to, medium heavy oils with water removal from the oil phase to 0.5% water, using a cyclone or other type of gas/liquid separator to remove gas before the pipe separator.

The solution requires an additional separator, which is complicated and expensive, and the coalescer itself, which is of a vertical type, cannot be reamed or pigged (cleaned) in the conventional manner. This also represents a considerable disadvantage of the prior art solution.

WO 2001/085297 A1 describes an electrostatic coalescer as such where the electrodes are wound helically around a pipe and where the electric field has a corresponding direction. No separation takes place prior to the fluid entering the coalecer. The fluid is in the form of a dispersion when entering the coalescer.

The present invention represents a considerably simplified separation solution in which the above disadvantages are avoided.

The present invention relates to a pipe separator for separation of oil, gas and water in connection with the extraction and production of oil and gas from formations under the sea bed, the pipe separator comprising an extended, tubular separator body with inlet and outlet ends, a diameter of the separator body at the inlet and outlet ends being mainly equal to or slightly greater than a diameter of a transport pipe to which the separator body is connectable, the pipe separator further comprising an electrostatic coalescer in the form of a tube, the coalescer including electrodes adapted to be supplied with an electric voltage to establish an electrostatic field within the tube and being incorporated in and constituting an integrated part of the pipe separator body, characterised in that the electrostatic coalescer is located at a distance from an inlet of the pipe separator body where, in use, a coarse separation of the water and oil has taken place, the coalescer being provided with an upper electrode and a lower electrode forming a vertical electric field.

The present invention also relates to a method for separation of fluids comprising oil and water in connection with the extraction and production of oil and gas from formations under the sea bed, the method comprising: passing the fluid through a pipe separator comprising an extended tubular separator body with inlet and outlet ends, a diameter of the separator body at the inlet and outlet ends being mainly equal to or slightly greater than a diameter of a transport pipe to which the separator body is connectable, the pipe separator further comprising a coalescer in the form of a tube and including electrodes the coalescer being incorporated in and constituting an integrated part of the pipe separator body; and supplying the electrodes with an electric voltage to establish an electrostatic field within the tube; characterised in that the electrostatic coalescer is located at a distance from an inlet of the pipe separator body where, in use, a coarse separation of the water and oil has taken place, the coalescer being provided with an upper electrode and a lower electrode forming a vertical electric field.

The dependent claims define advantageous features of the present invention.

The present invention will be described in further detail in the following with reference to the attached drawings, where:
Fig. 1 shows an elementary sketch of a pipe separator in accordance with the present invention.
Fig. 2 shows an enlarged part of the separator shown in Fig. 1 in the area of the coalescer in a cross-section a) and a longitudinal section b).

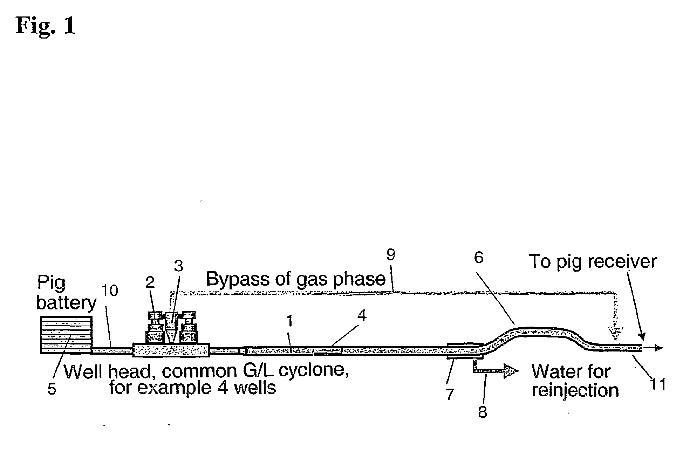

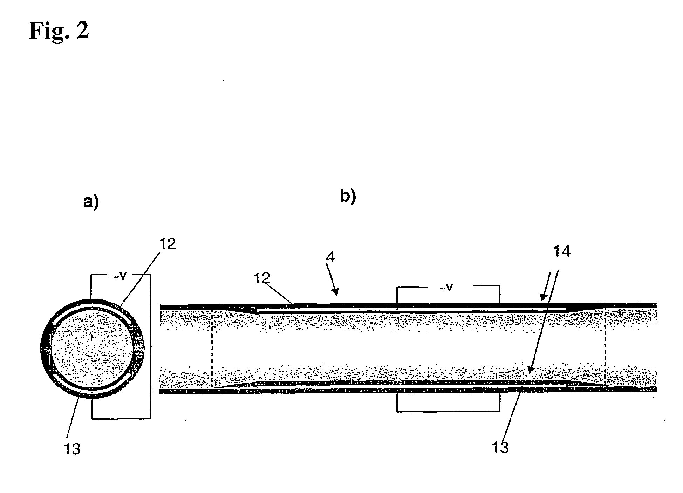

The solution shown in Fig. 1 comprises a tubular separator body 1, a liquid seal 6, arranged downstream of the separator body, for the water phase in the fluid (oil/water) that flows through the separator, a drainage device 7 with an outlet 8 for the separated water, a pig battery 5, arranged upstream of the separator body in connection with a well head, a connection pipe 10 that connects the well head to the separator body 1 and a transport pipe 11 for oil downstream of the separator body. The special feature of the present invention is that a coalescer 4 is incorporated in the separator body 1 as an integrated unit. The coalescer is expediently arranged at a distance of between 1/3 and 1/2 of the length of the separator body from the inlet of the separator body. However, its location is not limited to this. Fig. 2 shows in large scale, in cross-section and longitudinal section, the part of the separator body in which the coalescer is incorporated. As the figure shows, the coalescer comprises an upper electrode 12 and a lower electrode 13 that are enclosed in expediently insulating material in the wall 14 of the separator body. The electrodes are designed to have applied to them (not shown in further detail) an expedient voltage "V" (AC voltage) to create an electric field that contributes to increasing the separation of water from the fluid (oil and water) flowing through the separator. As Fig. 1 shows, a cyclone 3 (or another expedient gas/liquid separator) is arranged upstream of the separator body 1 to remove any gas from the fluid that is produced in the wells. The intention of removing the gas is to avoid it reducing the effect of the coalescer as the gas is a poor electrical conductor. Another intention is to prevent the formation of plug flow in the separator.

The method of operation of the separator solution in accordance with the present invention is otherwise as follows:
Fluid, i.e. gas, oil and water, that is produced is passed first to the cyclone 3, where the majority of gas is removed and passed on in a separate pipe 9, possibly being reintroduced into the transport pipe 11 after the separator.

The liquid phase, which may contain, small amounts of gas, is introduced into the separator body 1. Free water will separate quickly and form a water phase under the oil phase. The gas bubbles will collect in the top of the separator pipe and, depending on their concentration, form a free gas phase. When coarse separation has been completed (i.e. the water phase on the bottom, the oil phase with small oil drops in the centre and possibly a thin gas phase on the top), the fluid will pass into the integrated coalescer 4.

In the coalescer 4, a voltage drop will be created mainly over the oil zone because the water zone conducts current and the gas zone also has good conduction properties.

The voltage drop over the oil zone (alternating current) produces increased drop coalescence and destabilises the oil/water interface. The water drops, grow in size and will separate quickly after the fluid has entered the pipe separator element 1 again.

In the separator element downstream of the coalescer, the coalesced water drops will be separated out and collected in the collection unit 7, where the water is drained out via the pipe 8. The oil will flow on past the water seal 6 to the transport pipe 11.

The present invention as it is defined in the claims is not limited to the example shown and described above. The separator may be provided with two or more coalescers 4 arranged in series in the separator element 1. This may be particularly relevant for oils that are difficult to separate such as heavier oils.

The cyclone 3 may also be located in places other than the well head as shown in Fig. 1. It has proved expedient for the cyclone to be located in connection with equipment that causes high shear for the fluid as this produces good separation conditions. However, it may also be relevant to locate the cyclone in close proximity to the separator's inlet in situations in which the separator is located far from the well head.

## Claims

1. A pipe separator for separation of oil, gas and water in connection with the extraction and production of oil and gas from formations under the sea bed, the pipe separator comprising an extended, tubular separator body (1) with inlet and outlet ends, a diameter of the separator body (1) at the inlet and outlet ends being mainly equal to or slightly greater than a diameter of a transport pipe to which the separator body is connectable, the pipe separator further comprising an electrostatic coalescer in the form of a tube (4), the coalescer including electrodes adapted to be supplied with an electric voltage to establish an electrostatic field within the tube and being incorporated in and constituting an integrated part of the pipe separator body, **characterised in that**
the electrostatic coalescer (4) is located at a distance from an inlet of the pipe separator body where, in use, a coarse separation of the water and oil has taken place, the coalescer being provided with an upper electrode (12) and a lower electrode (13) forming a vertical electric field.

2. A pipe separator as claimed in claim 1, wherein a water seal (6) is arranged downstream of the separator body (1) and a device (7) is arranged in connection with the water seal for drainage of the water that is separated out in the separator body (1).

3. A pipe separator as claimed in claim 1 or 2, wherein the separator body (1) comprises two or more coalescers arranged in series.

4. An apparatus comprising a pipe separator as claimed in any preceding claim and a separator device arranged upstream of the separator body (1) for separation of the majority of any gas present.

5. An apparatus as claimed in claim 4, wherein the separator device is a cyclone (3).

6. An apparatus as claimed in claim 5, wherein the cyclone (3) is arranged in connection with a throttle valve that produces high shear for the fluid.

7. An apparatus as claimed in claim 5, wherein the cyclone (3) is arranged in close proximity to the inlet of the separator element (1).

8. A method for separation of fluids comprising oil and water in connection with the extraction and production of oil and gas from formations under the sea bed, the method comprising:
passing the fluid through a pipe separator comprising an extended tubular separator body (1) with inlet and outlet ends, a diameter of the separator body (1) at the inlet and outlet ends being mainly equal to or slightly greater than a diameter of a transport pipe to which the separator body (1) is connectable, the pipe separator further comprising a coalescer in the form of a tube (4) and including electrodes the coalescer being incorporated in and constituting an integrated part of the pipe separator body (1), and
supplying the electrodes with an electric voltage to establish an electrostatic field within the tube;
**characterised in that** the electrostatic coalescer (4) is located at a distance from an inlet of the pipe separator body where, in use, a coarse separation of the water and oil has taken place, the coalescer being provided with an upper electrode (12) and a lower electrode (13) forming a vertical electric field.

9. A method as claimed in claim 8, wherein the fluid further comprises gas, the method further comprising passing the fluid through a separator device arranged upstream of the separator body (1) to separate the majority of any gas present before passing the remaining fluid through the pipe separator.

## Patentansprüche

1. Rohrtrenner zur Trennung von Öl, Gas und Wasser in Verbindung mit der Extraktion und Produktion von Öl und Gas aus Formationen unter dem Seeboden, wobei der Rohrtrenner einen ausgedehnten, röhrenförmigen Trennerkörper (1) mit Einlass- und Auslassenden aufweist, wobei ein Durchmesser des Trennerkörpers (1) an den Einlass- und Auslassenden im Wesentlichen gleich oder geringfügig größer ist als ein Durchmesser eines Transportrohrs, mit welchem der Trennerkörper verbindbar ist, wobei der Rohrtrenner ferner einen elektrostatischen Abscheider in der Form eines Rohrs (4) aufweist, wobei der Abscheider Elektroden aufweist, die dafür eingerichtet sind, mit einer elektrischen Spannung zum Einrichten eines elektrostatischen Feldes in dem Rohr versorgt zu werden, und in dem Rohrtrennerkörper integriert ist und einen integralen Bestandteil desselben bildet,
**dadurch gekennzeichnet, dass** der elektrostatische Abscheider (4) in Distanz von einem Einlass des Rohrtrennerkörpers lokalisiert ist, wo bei Verwendung eine Roh- bzw. Grobtrennung des Wassers und des Öls stattgefunden hat, wobei der Abscheider mit einer oberen Elektrode (12) und einer unteren Elektrode (13) versehen ist, die ein vertikales elektrisches Feld ausbilden.

2. Rohrtrenner nach Anspruch 1, bei dem eine Wasserdichtung (6) stromabwärts des Trennerkörpers (1) angeordnet ist und eine Einrichtung (7) in Verbindung mit der Wasserdichtung zur Ableitung des in dem Trennerkörper (1) abgetrennten Wassers angeordnet ist.

3. Rohrtrenner nach Anspruch 1 oder 2, bei dem der Trennerkörper (1) zwei oder mehrere Abscheider, welche in Reihe angeordnet sind, aufweist.

4. Vorrichtung mit einem Rohrtrenner nach einem der vorstehenden Ansprüche und einer Trennvorrichtung, die stromaufwärts des Trennerkörpers (1) zur Abtrennung des Hauptteils eines jeglichen vorhandenen Gases angeordnet ist.

5. Vorrichtung nach Anspruch 4, bei der die Trennvorrichtung ein Fliehkraftabscheider (3) ist.

6. Vorrichtung nach Anspruch 5, bei der der Fliehkraftabscheider (3) in Verbindung mit einem Drosselventil angeordnet ist, das eine hohe Scher- bzw. Schubkraft für das Fluid bereitstellt.

7. Vorrichtung nach Anspruch 5, bei der der Fliehkraftabscheider (3) in enger Nachbarschaft zu dem Einlass des Trennerelements (1) angeordnet ist.

8. Verfahren zur Trennung von Fluiden, die Öl und Wasser enthalten, in Verbindung mit der Extraktion und Herstellung von Öl und Gas aus Formationen unter dem Seeboden, wobei das Verfahren umfasst:
Leiten des Fluids durch einen Rohrtrenner mit einem ausgedehnten, röhrenförmigen Trennerkörper (1) mit Einlass- und Auslassenden, wobei ein Durchmesser des Trennerkörpers (1) an den Einlass- und Auslassenden im Wesentlichen gleich oder geringfügig größer ist als ein Durchmesser eines Transportrohrs, mit welchem der Trennkörper (1) verbindbar ist, wobei der Rohrtrenner ferner einen Abscheider in Form eines Rohrs (4) und mit Elektroden aufweist, wobei der Abscheider in dem Rohrtrennerkörper (1) integriert ist und einen integralen Bestandteil desselben bildet; und
Versorgen der Elektroden mit einer elektrischen Spannung zum Einrichten eines elektrostatischen Felds in dem Rohr;
**dadurch gekennzeichnet, dass** der elektrostatische Abscheider (4) in Distanz von einem Einlass des Rohrtrennerkörpers angeordnet ist, wo bei Verwendung eine Grobtrennung des Wassers und des Öls stattgefunden hat, wobei der Abscheider mit einer oberen Elektrode (12) und einer unteren Elektrode (13), die ein vertikales elektrisches Feld ausbilden, versehen ist.

9. Verfahren nach Anspruch 8, bei dem das Fluid ferner Gas beinhaltet, wobei das Verfahren ferner beinhaltet, das Fluid durch eine stromaufwärts des Trennerkörpers (1) angeordnete Trennvorrichtung zu leiten, um den Hauptteil eines jeglichen vorhandenen Gases vor dem Leiten des verbleibenden Fluids durch den Rohrtrenner abzutrennen.

## Revendications

1. Séparateur à tube pour la séparation de pétrole, de gaz et d'eau en liaison avec l'extraction et la production de pétrole et de gaz à partir de formations sous le lit marin, le séparateur à tube comprenant un corps séparateur (1) tubulaire étendu avec des extrémités d'entrée et de sortie, un diamètre du corps séparateur (1) aux extrémités d'entrée et de sortie étant principalement égal ou légèrement supérieur à un diamètre d'un tube de transport auquel le corps séparateur peut être raccordé, le séparateur à tube comprenant également un coalesceur électrostatique en forme de tube (4), le coalesceur comprenant des électrodes adaptées pour être alimentées par une tension électrique afin d'établir un champ électrostatique à l'intérieur du tube et étant incorporé dans et constituant une partie intégrante du corps de séparateur à tube, **caractérisé en ce que**
le coalesceur électrostatique (4) est situé à distance d'une entrée du corps de séparateur à tube où, pendant l'utilisation, une séparation grossière de l'eau et du pétrole est intervenue, le coalesceur étant muni d'une électrode supérieure (12) et d'une électrode inférieure (13) formant un champ électrique vertical.

2. Séparateur à tube selon la revendication 1, dans lequel un joint hydraulique (6) est disposé en aval du corps séparateur (1), et un dispositif (7) est disposé en liaison avec le joint hydraulique pour le drainage de l'eau qui est évacuée par séparation dans le corps séparateur (1).

3. Séparateur à tube selon la revendication 1 ou 2, dans lequel le corps séparateur (1) comprend deux coalesceurs ou davantage disposés en série.

4. Appareil comprenant un séparateur à tube selon l'une quelconque des revendications précédentes et un dispositif séparateur disposé en amont du corps séparateur (1) pour la séparation de la majeure partie de tout gaz présent.

5. Appareil selon la revendication 4, dans lequel le dispositif séparateur est un cyclone (3).

6. Appareil selon la revendication 5, dans lequel le cyclone (3) est disposé en liaison avec une vanne d'étranglement qui soumet le fluide à un fort cisaillement.

7. Appareil selon la revendication 5, dans lequel le cyclone (3) est disposé très près de l'entrée de l'élément séparateur (1).

8. Méthode de séparation de fluides comprenant du pétrole et de l'eau en liaison avec l'extraction et la production de pétrole et de gaz à partir de formations sous le lit marin, la méthode comprenant les étapes consistant à :
faire passer le fluide à travers un séparateur à tube comprenant un corps séparateur (1) tubulaire étendu avec des extrémités d'entrée et de sortie, un diamètre du corps séparateur (1) aux extrémités d'entrée et de sortie étant principalement égal ou légèrement supérieur à un diamètre d'un tube de transport auquel le corps séparateur (1) peut être raccordé, le séparateur à tube comprenant également un coalesceur électrostatique en forme de tube (4) et comprenant des électrodes, le coalesceur étant incorporé dans et constituant une partie intégrante du corps séparateur à tube (1) ; et
alimenter les électrodes avec une tension électrique pour établir un champ électrostatique à l'intérieur du tube ;
**caractérisée en ce que** le coalesceur électrostatique (4) est situé à distance d'une entrée du corps de séparateur à tube où, pendant l'utilisation, une séparation grossière de l'eau et du pétrole est intervenue, le coalesceur étant muni d'une électrode supérieure (12) et d'une électrode inférieure (13) formant un champ électrique vertical.

9. Méthode selon la revendication 8, dans laquelle le fluide comprend également du gaz, la méthode comprenant également les étapes consistant à faire passer le fluide à travers un dispositif séparateur disposé en amont du corps séparateur (1) pour séparer la majeure partie de tout gaz présent avant de faire passer le fluide restant à travers le séparateur à tube.
